# EUROPEAN PATENT APPLICATION

(11) **EP 4 707 703 A1**
(43) Date of publication of application: **11.03.2026**
(21) Application number: 24823103.7
(22) Date of filing: 18.04.2024
(51) Int. Cl.: F25B 45/00

(54) **METHOD FOR TREATING WORKING FLUID AND DEVICE FOR TREATING WORKING FLUID**

(30) Priority: 16.06.2023 WO PCT/JP2023/022413
(71) Applicant: MITSUBISHI ELECTRIC CORPORATION, Chiyoda-ku Tokyo 100-8310 (JP)
(72) Inventor: HIRATSUKA, Kengo, Tokyo 100-8310 (JP); TOYAMA, Satoru, Tokyo 100-8310 (JP); YOKOGI, Tatsuya, Tokyo 100-8310 (JP); KAWASHIMA, Atsushi, Tokyo 100-8310 (JP)
(74) Representative: Meissner Bolte Partnerschaft mbB
(86) International application number: PCT/JP2024/015471
(87) International publication number: WO 2024/257481

(57) **Abstract**

Provided is a method for treating a working fluid that improves the amount of an odorant to be separated. The method for treating the working fluid includes a step of preparing the working fluid (S1c), and a step of separating the odorant from refrigerant (S2c). The working fluid contains the refrigerant, a refrigerating machine oil, and the odorant. A boiling point Tb1 of the odorant is higher than a boiling point Tb2 of the refrigerant. In the step of separating (S1c), a temperature of the working fluid is maintained above the boiling point Tb1 of the refrigerant and below the boiling point Tb2 of the odorant.

## Description

### TECHNICAL FIELD

The present disclosure relates to a method for treating a working fluid, and a treatment device.

### BACKGROUND ART

Conventionally, refrigerant used in a refrigeration cycle apparatus contains an odorant so as to be perceived by the sense of smell (see WO 2021/166028).

### CITATION LIST

### PATENT LITERATURE

PTL 1: WO 2021/166028

### SUMMARY OF INVENTION

### TECHNICAL PROBLEM

However, since the odorant contained in the refrigerant, which is an example of a working fluid, may remain in a gas phase, there is room for improvement in separating the odorant from the refrigerant.

The present disclosure has been made to solve the aforementioned problem, and an object of the present disclosure is to provide a method for treating a working fluid and a treatment device that improve the amount of an odorant to be separated.

### SOLUTION TO PROBLEM

A method for treating a working fluid according to the present disclosure includes preparing the working fluid, and separating an odorant from refrigerant. The working fluid contains the refrigerant, a refrigerating machine oil, and the odorant. A boiling point of the odorant is higher than a boiling point of the refrigerant. In the separating, a temperature of the working fluid is maintained above the boiling point of the refrigerant and below the boiling point of the odorant.

A treatment device according to the present disclosure is a treatment device to treat a working fluid. The working fluid contains refrigerant, a refrigerating machine oil, and an odorant. A boiling point of the odorant is higher than a boiling point of the refrigerant. The treatment device is configured to cool a temperature of the working fluid to above the boiling point of the refrigerant and below the boiling point of the odorant, and thereby separate the refrigerant in a gaseous state and the odorant in a liquid state.

A treatment device according to the present disclosure includes a cooling unit and a separation unit. The cooling unit cool a working fluid. The working fluid contains refrigerant, a refrigerating machine oil, and an odorant. The separation unit separates the odorant from the refrigerant in the working fluid which is cooled. A boiling point of the odorant is higher than a boiling point of the refrigerant. The cooling unit cools a temperature of the working fluid to above the boiling point of the refrigerant and below the boiling point of the odorant. The separation unit separates the refrigerant in a gaseous state and the odorant in a liquid state.

### ADVANTAGEOUS EFFECTS OF INVENTION

According to the above, it is possible to obtain a method for treating a working fluid and a treatment device that improve the amount of an odorant to be separated.

### BRIEF DESCRIPTION OF DRAWINGS

Fig. 1 is a schematic diagram showing an example of a refrigeration cycle apparatus (a closed-system refrigerant circuit) according to a first embodiment.
Fig. 2 is a schematic view of a separation unit in the refrigeration cycle apparatus according to the first embodiment.
Fig. 3 is a flowchart of a method for discharging refrigerant in the refrigerant cycle apparatus according to the first embodiment.
Fig. 4 is a flowchart of a method for discharging refrigerant in a refrigerant cycle apparatus according to a second embodiment.
Fig. 5 is a schematic diagram showing an example of a treatment device according to a third embodiment.
Fig. 6 is a schematic diagram of a separation unit in the treatment device according to the third embodiment.
Fig. 7 is a flowchart of a method for treating a working fluid in the treatment device according to the third embodiment.

### DESCRIPTION OF EMBODIMENTS

Hereinafter, embodiments of the present disclosure will be described. It should be noted that, unless otherwise specified, the same or corresponding parts in the following drawings will be designated by the same reference numerals, and the description thereof will not be repeated.

### First Embodiment.

### <Configuration of Refrigeration Cycle Apparatus (Refrigerant Circuit)>

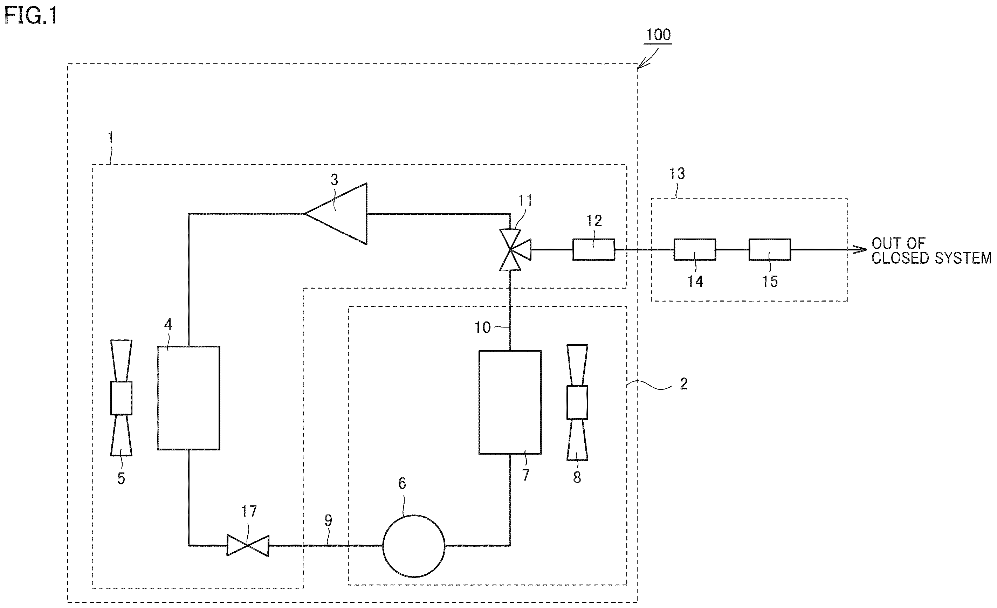

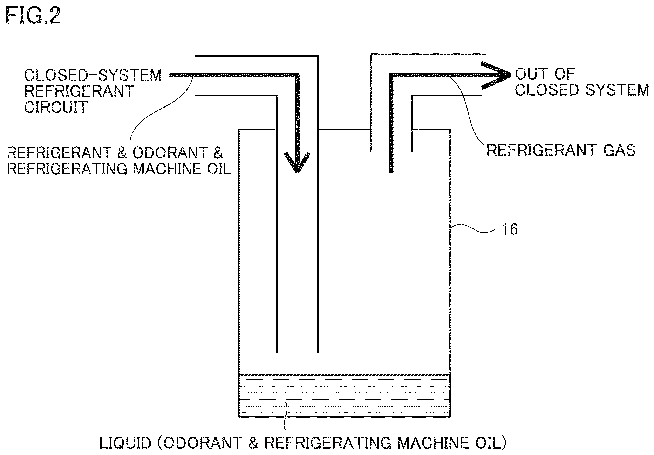

Fig. 1 is a schematic diagram showing an example of a refrigeration cycle apparatus (a closed-system refrigerant circuit 100) according to a first embodiment. Fig. 2 is a schematic view of a separation unit 15 in the refrigeration cycle apparatus according to the first embodiment.

The refrigeration cycle apparatus is, for example, a refrigeration cycle apparatus for air conditioning, and mainly includes an outdoor unit 1 and an indoor unit 2, as shown in Fig. 1. Outdoor unit 1 and indoor unit 2 are connected using a liquid pipe 9 and a gas pipe 10.

Outdoor unit 1 has a compressor 3, a condenser 4, and an outdoor blower 5. Compressor 3 is connected to condenser 4 by a pipe. Indoor unit 2 has an expansion valve 6, an evaporator 7, and an indoor blower 8. Expansion valve 6 is connected to evaporator 7 by a pipe.

Compressor 3 of outdoor unit 1 and evaporator 7 of indoor unit 2 are connected by gas pipe 10. Condenser 4 of outdoor unit 1 and expansion valve 6 of indoor unit 2 are connected by liquid pipe 9. With such a configuration of the refrigeration cycle apparatus, closed-system refrigerant circuit 100 is formed. Refrigerant and an odorant circulate through closed-system refrigerant circuit 100 via liquid pipe 9 and gas pipe 10.

Compressor 3 compresses the refrigerant and the odorant that have turned into a gaseous state in gas pipe 10. Condenser 4 cools the refrigerant and the odorant in the gaseous state compressed by compressor 3 to change the state of the refrigerant and the odorant from the gaseous state to a high-pressure liquid state or a gas-liquid two-phase state. Expansion valve 6 decompresses the refrigerant and the odorant in the high-pressure liquid state or the gas-liquid two-phase state. Evaporator 7 heats the decompressed refrigerant and odorant to change the state thereof to a low-pressure gaseous state. Compressor 3 sucks and recompresses the refrigerant and the odorant that have turned into the low-pressure gaseous state by evaporator 7.

In closed-system refrigerant circuit 100, any of an accumulator, a suction muffler, and a receiver may be provided between compressor 3 and evaporator 7. The accumulator and the suction muffler are devices that separate a liquid and a gas and supply the gas to the compressor. The receiver is a device that stores the liquid refrigerant liquefied by condenser 4. By providing any of the accumulator, the suction muffler, and the receiver, a large amount of liquid refrigerant is prevented from flowing into compressor 3. As a result, it is possible to prevent over-dilution of a refrigerating machine oil and resultant deterioration of lubricity of a sliding portion of compressor 3.

Compressor 3 includes the refrigerating machine oil therein. The refrigerating machine oil maintains the lubricity of the sliding portion of compressor 3. The refrigerating machine oil is discharged to gas pipe 10 together with the refrigerant and the odorant compressed by the sliding portion of compressor 3. Accordingly, the refrigerating machine oil circulates through closed-system refrigerant circuit 100 together with the refrigerant and the odorant.

It should be noted that outdoor blower 5 blows air to condenser 4. Outdoor blower 5 is provided to facilitate absorption or release of heat by heat exchange between the air and the refrigerant flowing through condenser 4. Further, indoor blower 8 blows air to evaporator 7. Indoor blower 8 is provided to facilitate absorption or release of heat by heat exchange between the air and the refrigerant flowing through evaporator 7.

In the refrigeration cycle apparatus according to the first embodiment, condenser 4 and evaporator 7 are heat exchangers that exchange heat with the air. In the refrigeration cycle apparatus according to the first embodiment, condenser 4 and evaporator 7 may exchange heat with a liquid such as water, instead of the air, for example.

In the refrigeration cycle apparatus according to the first embodiment, evaporator 7 is provided in indoor unit 2, and condenser 4 is provided in outdoor unit 1. However, for example, evaporator 7 may be provided in outdoor unit 1, and condenser 4 may be provided in indoor unit 2.

Expansion valve 6 may be provided in outdoor unit 1, instead of indoor unit 2. Expansion valve 6 may be provided in both outdoor unit 1 and indoor unit 2. A plurality of indoor units 2 may be provided in closed-system refrigerant circuit 100. A plurality of outdoor units 1 may be provided in closed-system refrigerant circuit 100.

Outdoor unit 1 as described above may be provided with a switching mechanism (not shown), for example. The switching mechanism switches an inlet pipe and an outlet pipe of compressor 3 by disposing a four-way valve or a combination of a plurality of valves. By providing the switching mechanism, a heat exchanger in outdoor unit 1 can function as an evaporator, and a heat exchanger in indoor unit 2 can function as a condenser. Thereby, the refrigeration cycle apparatus can be used as a heating apparatus for heating an indoor room utilizing outdoor heat.

It should be noted that the refrigeration cycle apparatus may be, for example, any of an apparatus capable of performing both cooling and heating, an apparatus capable of performing only cooling, and an apparatus capable of performing only heating.

The application of the refrigeration cycle apparatus according to the first embodiment is not limited to air conditioning. The refrigeration cycle apparatus according to the first embodiment may be used for refrigeration, cold storage, or hot water supply.

Outdoor unit 1 has a gas pipe-side operation valve 11, a liquid pipe-side operation valve 17, and a service port 12. Gas pipe-side operation valve 11 is provided to gas pipe 10 that connects evaporator 7 and compressor 3. Liquid pipe-side operation valve 17 is provided to liquid pipe 9 that connects condenser 4 and expansion valve 6. By opening and closing gas pipe-side operation valve 11 and liquid pipe-side operation valve 17, the refrigerant can be charged into closed-system refrigerant circuit 100, or the refrigerant can be discharged from closed-system refrigerant circuit 100.

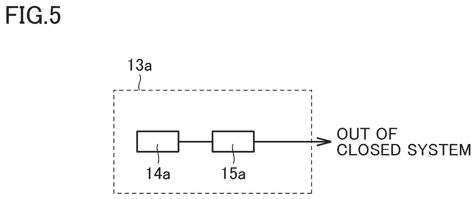

As shown in Fig. 1, service port 12 is connected to gas pipe 10 via gas pipe-side operation valve 11. Gas pipe-side operation valve 11 can be opened such that the refrigerant and the odorant are discharged out of a closed system. On this occasion, the refrigerant and the odorant pass through service port 12, and are supplied to a discharge device as a treatment device 13a (see Fig. 5), for example.

When the refrigerant in closed-system refrigerant circuit 100 is discharged out of the closed system, service port 12 is connected to the discharge device (a discharge path 13) via a hose or the like. The discharge device has a cooling unit 14 and a separation unit 15. The refrigerant and the odorant that have passed through service port 12 are supplied to cooling unit 14. In cooling unit 14, the refrigerant and the odorant are cooled.

The refrigerant and the odorant cooled in cooling unit 14 are supplied to separation unit 15. The refrigerant and the odorant supplied to separation unit 15 are separated into the gaseous refrigerant and the liquid odorant in separation unit 15. It should be noted that, although cooling unit 14 and separation unit 15 may be configured independently of each other as shown in Fig. 1, cooling unit 14 may be configured to include separation unit 15. That is, cooling unit 14 may be configured to cool separation unit 15. Thereby, cooling and separation of the refrigerant and the odorant can be performed simultaneously.

The odorant cooled in cooling unit 14 is in a vapor-liquid equilibrium state. That is, the odorant in an amount corresponding to a saturated vapor pressure of the odorant at a temperature during cooling is contained in the gaseous refrigerant (in a gas phase). Accordingly, when the refrigerant is discharged out of the closed system, the odorant remains in the gas phase, and thus a part of the odorant is discharged together with the refrigerant.

Here, a method for discharging the refrigerant according to the first embodiment has a characteristic that the refrigerant and the odorant are discharged together with the refrigerating machine oil. Since the refrigerant and the odorant are discharged together with the refrigerating machine oil, the liquid odorant is contained in the refrigerating machine oil in separation unit 15. When the liquid odorant is contained in the refrigerating machine oil, a vapor pressure depression of the odorant occurs. Occurrence of a vapor pressure depression of the odorant means that the saturated vapor pressure of the odorant decreases and the amount of the odorant contained in the gas phase is reduced. That is, since a vapor pressure depression of the odorant occurs, the amount of the odorant to be separated from the gaseous refrigerant in separation unit 15 is improved, and the amount of the odorant to be discharged out of the closed system together with the refrigerant can be reduced.

Here, cooling unit 14 will be specifically described. In cooling unit 14, the refrigerant, the odorant, and the refrigerating machine oil are cooled to a temperature Tc. Temperature Tc is above a normal boiling point Tb1 of the refrigerant and below a normal boiling point Tb2 of the odorant. Thereby, the gaseous refrigerant is not liquefied and the odorant is liquefied in cooling unit 14.

Temperature Tc is preferably above a normal melting point Tm2 of the odorant. Thereby, the odorant is not solidified, and occurrence of a blockage in discharge path 13 can be suppressed.

The cooling method in cooling unit 14 is not particularly limited, and may be a cooling method by heat exchange, or may be a cooling method by adiabatic expansion. Specifically, the cooling method by heat exchange is a method of cooling a fluid passing through discharge path 13 by heat exchange between the fluid and the outside. The cooling method by adiabatic expansion is a method of cooling a fluid passing through discharge path 13 by adiabatically expanding the fluid. Here, the fluid is the refrigerant, the odorant, and the refrigerating machine oil.

The cooling method by heat exchange may be, for example, a method of performing heat exchange by bringing discharge path 13 into contact with a low-temperature medium. Heat exchange is performed by exposing at least a part of a member constituting discharge path 13 to a medium such as a low-temperature gas or liquid, for example. The low-temperature medium is preferably a material that is inert to the member constituting discharge path 13. This prevents the strength of discharge path 13 from being reduced, and being deteriorated in a short time.

When the cooling method in cooling unit 14 is the cooling method by heat exchange, at least a part of cooling unit 14 is preferably constituted by a material having a high thermal conductivity. Thereby, the fluid passing through discharge path 13 can be efficiently cooled. The material having a high thermal conductivity is a metal, for example. In particular, among metals, aluminum, iron, copper, and the like have a high thermal conductivity, and a low reactivity with the refrigerant. Accordingly, the material constituting at least a part of cooling unit 14 is preferably aluminum, iron, copper, or an alloy containing at least one of them as a main component.

In the cooling method by heat exchange, heat exchange may be performed using a refrigeration cycle apparatus (a second refrigeration cycle apparatus) different from the refrigeration cycle apparatus that discharges the refrigerant. Specifically, the fluid passing through discharge path 13 may be cooled by heat exchange with an evaporator of the second refrigeration cycle apparatus. In this case, the member constituting discharge path 13 and a member constituting the evaporator of the second refrigeration cycle apparatus are preferably made of a material containing the same kind of metal as a main component. Thereby, bimetallic corrosion does not occur in the member constituting discharge path 13 and the member constituting the evaporator of the second refrigeration cycle apparatus.

The refrigerant, the odorant, and the refrigerating machine oil thus cooled are supplied to separation unit 15.

Next, separation unit 15 will be specifically described. To prevent the odorant liquefied in cooling unit 14 from being discharged out of the closed system through discharge path 13, a liquid and a gas are separated in separation unit 15, and only the gas is discharged out of the closed system.

The separation method in separation unit 15 is not particularly limited, and may be any of a separation method utilizing a density difference between the gas and the liquid, a separation method utilizing a surface tension, a separation method utilizing a centrifugal force, and the like.

The separation method utilizing the density difference between the gas and the liquid is a method of separating the liquid and the gas by utilizing that the density of the liquid is higher than the density of the gas, as shown in Fig. 2, for example. Specifically, the refrigerant, the odorant, and the refrigerating machine oil are supplied to a separation container 16. The liquid is stored in a lower portion of separation container 16. The gas is discharged out of the closed system.

The separated liquid contains the odorant liquefied in cooling unit 14 and the refrigerating machine oil. Since the refrigerating machine oil and the odorant are mixed as the liquid, a vapor pressure depression of the odorant occurs. Since a vapor pressure depression of the odorant occurs in separation unit 15, the amount of the odorant present in the gas phase in separation container 16 decreases. That is, the amount of the gaseous odorant to be discharged out of the closed system together with the refrigerant decreases, and an odor of the discharged gaseous refrigerant is reduced, when compared with a case where the refrigerating machine oil is not present in separation unit 15. A vapor pressure depression of the odorant occurs as long as the odorant and the refrigerating machine oil are in contact with each other. Accordingly, in any of the separation method utilizing the surface tension and the separation method utilizing the centrifugal force, the effect of reducing the discharge amount of the odorant utilizing a vapor pressure depression can also be obtained.

Separation container 16 may include a liquid level indicating portion and a liquid discharge portion (not shown). The liquid level indicating portion indicates the height of a liquid level inside separation container 16. The liquid discharge portion can discharge the liquid stored inside separation container 16. The liquid stored inside separation container 16 is discharged by an opening/closing operation.

When the liquid level in separation container 16 rises above a predetermined height, the stored liquid may be discharged. Thereby, the liquid odorant is discharged. As a result, discharge of the gaseous refrigerant having a strong odor is prevented.

Further, separation container 16 may include a member capable of capturing the odorant inside separation container 16 by adsorption or absorption (not shown). Thereby, the odorant in the gas phase is further removed. As a result, the odor of the discharged gaseous refrigerant is reduced.

It should be noted that, in the separation method utilizing the density difference between the gas and the liquid, the configuration of separation unit 15 may not be the configuration shown in Fig. 2. The configuration of separation unit 15 may be a configuration including a space in which a diameter of a part of a pipe constituting discharge path 13 is enlarged, or may be a configuration including a baffle-type oil separator, for example.

A discharge amount of the refrigerating machine oil may be increased by quickly opening gas pipe-side operation valve 11 to the outside of the closed system. Specifically, when gas pipe-side operation valve 11 is quickly opened, the pressure in closed-system refrigerant circuit 100 decreases, and thus the refrigerant dissolved in the refrigerating machine oil in compressor 3 quickly evaporates. As the refrigerant evaporates, the refrigerating machine oil foams. That is, as the refrigerant contained in the refrigerating machine oil is vaporized, an apparent volume of the refrigerating machine oil increases. As a result, an oil level of the refrigerating machine oil rises, and the amount of the refrigerating machine oil flowing out to the pipe forming closed-system refrigerant circuit 100 increases. As a result, the amount of the refrigerating machine oil to be supplied to discharge path 13 increases. Thereby, the effect of separating the odorant from the gaseous refrigerant by the refrigerating machine oil can be improved.

Here, when gas pipe-side operation valve 11 is opened, it is preferable to quickly open gas pipe-side operation valve 11 such that a flow rate of the refrigerant discharged immediately after gas pipe-side operation valve 11 is opened is larger than an evaporation amount of the refrigerant. Specifically, gas pipe-side operation valve 11 is quickly opened such that the flow rate of the refrigerant passing through discharge path 13 immediately after gas pipe-side operation valve 11 is opened is larger than the evaporation amount of the refrigerant contained in the liquid phase (containing the refrigerating machine oil) in closed-system refrigerant circuit 100.

Further, the refrigerating machine oil in compressor 3 may be heated before or during opening of gas pipe-side operation valve 11. By heating the refrigerating machine oil in compressor 3, the refrigerant and the odorant dissolved in the refrigerating machine oil evaporate. As a result, the refrigerating machine oil foams. That is, the oil level of the refrigerating machine oil rises, and the amount of the refrigerating machine oil to be supplied to discharge path 13 increases. Thereby, the effect of separating the odorant from the gaseous refrigerant by the refrigerating machine oil can be improved.

It should be noted that, by performing quick opening of gas pipe-side operation valve 11 and heating in compressor 3 in combination, the amount of the refrigerating machine oil to be supplied to discharge path 13 further increases.

In discharge path 13, a filter may be provided inside separation unit 15, or in a pipe on the outside of the closed system relative to separation unit 15. The filter suppresses the liquid from being discharged out of the closed system, and allows the gaseous refrigerant to pass therethrough. Thereby, the amount of the odorant to be discharged out of the closed system is reduced, and the odor of the discharged gaseous refrigerant is reduced.

The material constituting the filter is a material capable of absorbing the odorant and the refrigerating machine oil. Further, the structure of the filter is preferably a structure excellent in air permeability so as not to reduce the flow rate of the gaseous refrigerant. As the material constituting such a filter, a nonwoven fabric may be used, for example.

The gaseous refrigerant discharged from separation unit 15 is discharged by either a recovery method or an atmospheric release method, in accordance with a global warming potential of the refrigerant, legal regulations, and the like. The refrigerant is preferably recovered by a recovery container. However, when it is difficult to charge the refrigerant into the recovery container for reasons such as legal regulations, the refrigerant is released to the atmosphere.

The refrigerant used in the refrigeration cycle apparatus is preferably a fluid whose normal boiling point Tb1 is below an outside air temperature in an environment in which the refrigerant is discharged. For example, when the outside air temperature is 15°, normal boiling point Tb1 of the refrigerant is preferably below 15°. Thereby, the refrigerant in closed-system refrigerant circuit 100 can be discharged to the outside by vapor pressure. That is, when the refrigerant is discharged, it is not necessary to suck the refrigerant by a pump or the like.

Further, the refrigerant is a fluid whose normal boiling point Tb1 is below normal boiling point Tb2 of the odorant. Thereby, the odorant can be selectively liquefied by cooling the refrigerant and the odorant in cooling unit 14 to temperature Tc between normal boiling point Tb2 of the odorant and normal boiling point Tb1 of the refrigerant. As a result, only the gaseous refrigerant can be discharged out of the closed system. It is only necessary for the refrigerant to satisfy the temperature relation described above, and the material constituting the refrigerant may be any of a halogenated hydrocarbon and a natural refrigerant, or may be a mixture thereof.

Examples of the halogenated hydrocarbon include chlorofluorocarbon, hydrochlorofluorocarbon, hydrofluorocarbon, hydrofluoroolefin, hydrochlorofluoroolefin, fluoroiodocarbon, and the like. The refrigerant used may be any of HFC-23, HFC-32, HFC-41, HFC-125, HFC-134, HFC-134a, HFC-143, HFC-143a, HFC-152, HFC-152a, HFC-161, HFO-1141, HFO-1132a, HFO-1132(E), HFO-1132(Z), HFO-1123, HFO-1225ye(Z), HFO-1225ye(E), HFO-1225zc, HFO-1234yf, HFO-1234ze(E), HFO-1234ze(Z), HFO-1234ye(Z), HFO-1234ye(E), HFO-1243zf, HFO-1252zf, HFO-1261yf, FIC-13I1(CF3I), HCFC-22, and CFC-12, for example.

In particular, as a refrigerant having a small global warming potential, the refrigerant used is more preferably any of HFO-1132a, HFO-1132(E), HFO-1132(Z), HFO-1123, HFO-1225ye(Z), HFO-1225ye(E), HFO-1225zc, HFO-1234yf, HFO-1234ze(E), HFO-1234ze(Z), HFO-1234ye(Z), HFO-1234ye(E), HFO-1243zf, HFO-1252zf, HFO-1261yf, and FIC-13I1 (CF3I), for example.

The natural refrigerant is a refrigerant originally existing in the natural world. Examples of the natural refrigerant include carbon dioxide (R-744), ammonia (R-717), hydrocarbon, and the like. The hydrocarbon is a refrigerant composed of only carbon and hydrogen. Examples of the hydrocarbon include R-290 (propane), R-1270 (propylene), R-600 (butane), R-600a (isobutane), and the like. Since these natural refrigerants have a small global warming potential, they are suitable as a refrigerant used in the refrigeration cycle apparatus.

The odorant preferably has a unique odor. Since the odorant has a unique odor, the refrigerant mixed with the odorant is sensed by the sense of smell. Examples of the material constituting the odorant include mercaptans, sulfides, thiophenes, cyclohexene, acrylic acid esters, ammonia, amines, pyrazines, norbornenes, and the like. Examples of the mercaptans include methyl mercaptan, ethyl mercaptan, normal propyl mercaptan (n-propyl mercaptan), isopropyl mercaptan, tertiary butyl mercaptan, and the like. Examples of the sulfides include dimethyl sulfide, diethyl sulfide, methyl ethyl sulfide, and the like. Examples of the thiophenes include tetrahydrothiophene and the like. These odorants may be used alone, or may be used in a combination of two or more thereof. Further, the material constituting the odorant may include a compound having a unique odor other than the materials described above.

Further, the odorant is a material having normal boiling point Tb2 higher than normal boiling point Tb 1 of the refrigerant. Thereby, the odorant can be selectively liquefied by cooling the refrigerant and the odorant in cooling unit 14 to temperature Tc between normal boiling point Tb2 of the odorant and normal boiling point Tb1 of the refrigerant. For example, when R-290 is used as the refrigerant, R-290 has normal boiling point Tb1 of -42°C. Accordingly, an odorant having normal boiling point Tb2 higher than -42°C is used as the odorant. For example, tetrahydrothiophene having normal boiling point Tb2 of 121°C or cyclohexene having normal boiling point Tb2 of 83°C is suitable as the odorant to be mixed with R-290 as the refrigerant. When the odorant is a mixture of two or more compounds, it is only necessary that normal boiling points Tb2 of all the odorants are higher than normal boiling point Tb1 of the refrigerant.

When the refrigerant is a non-azeotropic mixed refrigerant, normal boiling point Tb2 of the odorant preferably has a boiling point higher than boiling point Tb1 of the refrigerant under atmospheric pressure. Thereby, the odorant can be selectively liquefied without liquefying the refrigerant in cooling unit 14. For example, when R-454B is used as the refrigerant, R-454B has a dew point under the atmospheric pressure of -50.9°C, and boiling point Tb1 under the atmospheric pressure of -50.0°C. In this case, it is preferable to use an odorant having normal boiling point Tb2 higher than -50.0°C, as the odorant. It should be noted that R-454B is a mixed refrigerant of R-32 and R-1234y, having a mass ratio of R-32 to R-1234y (= R-32/R-1234yf) of 68.9 mass % / 31.1 mass %.

The refrigerating machine oil contains a base oil. The base oil includes at least one of an oxygen-containing oil and a hydrocarbon oil. Examples of the oxygen-containing oil include polyalkylene glycol, polyol ester, poly vinyl ether, and the like. Examples of the hydrocarbon oil include poly alpha olefin, alkyl benzenes, alkyl naphthalene, a mineral oil, and the like.

The lubricity of the sliding portion of compressor 3 largely depends on kinematic viscosity of the base oil contained in the refrigerating machine oil. The material constituting the base oil is preferably a material having a kinematic viscosity higher than that of the refrigerant. The kinematic viscosity of the base oil at 40°C is preferably 5 mm²/second or more and 250 mm²/second or less. It is possible to set the kinematic viscosity of the base oil within the above range, by adjusting a molecular structure and a polymerization degree of the material constituting the base oil. When the base oil has a kinematic viscosity higher than that of the refrigerant, the lubricity of the sliding portion in compressor 3 is maintained without significantly reducing cooling efficiency of the refrigeration cycle apparatus.

The base oil is preferably an oxygen-containing oil. The oxygen-containing oil is highly polar. Accordingly, the oxygen-containing oil can dissolve a compound having a polarity. Here, the odorant exemplified as the material constituting the odorant has any of a nitrogen atom, an oxygen atom, a sulfur atom, and a carbon-carbon double bond in a chemical structure. That is, the odorant described above is a compound having a polarity due to imbalance of charges. Accordingly, the refrigerating machine oil including the oxygen-containing oil can dissolve the odorant. Since the odorant is dissolved in the refrigerating machine oil including the oxygen-containing oil, a vapor pressure depression of the odorant occurs. That is, since a vapor pressure depression of the odorant occurs, the amount of the odorant to be separated in separation unit 15 is improved. As a result, the odor of the discharged gaseous refrigerant gas can be reduced.

A pour point of the refrigerating machine oil is preferably lower than temperature Tc of the refrigerant, the odorant, and the refrigerating machine oil in cooling unit 14. Since the pour point of the refrigerating machine oil is below temperature Tc in cooling unit 14, it is possible to prevent a blockage in discharge path 13 due to a reduction in fluidity of the refrigerating machine oil.

The refrigerating machine oil may contain, as additives in the oil, an antioxidant, an acid scavenger, an extreme-pressure agent (antiwear agent), an oxygen scavenger, a fluorescent agent, a coloring agent, and the like. However, in order to prevent a blockage in discharge path 13 due to the additives in the oil, it is preferable that these additives in the oil do not precipitate when the refrigerating machine oil is cooled in cooling unit 14.

### <Method for Discharging Refrigerant>

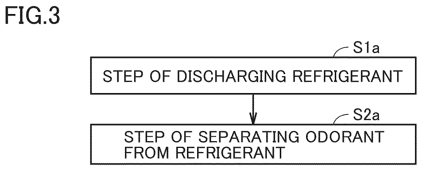

Fig. 3 is a flowchart of a method for discharging the refrigerant in the refrigerant cycle apparatus according to the first embodiment. In the method for discharging the refrigerant in the refrigeration cycle apparatus according to the first embodiment, first, a step of discharging the refrigerant (S1a) is performed. In this step (S1a), the refrigerant containing the odorant is supplied from the refrigeration cycle apparatus to the discharge device. Specifically, gas pipe-side operation valve 11 is opened such that the refrigerant and the odorant in closed-system refrigerant circuit 100 are discharged to the discharge device. On this occasion, the refrigerant and the odorant are discharged together with the refrigerating machine oil. It should be noted that, in the refrigerant and the odorant used in the refrigeration cycle apparatus, boiling point Tb2 of the odorant is higher than boiling point Tb1 of the refrigerant. The refrigerating machine oil is preferably an oxygen-containing oil.

It should be noted that, when gas pipe-side operation valve 11 is opened, gas pipe-side operation valve 11 is quickly opened such that the flow rate of the refrigerant discharged immediately after gas pipe-side operation valve 11 is opened is larger than the evaporation amount of the refrigerant. Specifically, gas pipe-side operation valve 11 is quickly opened such that the flow rate of the refrigerant passing through discharge path 13 immediately after gas pipe-side operation valve 11 is opened is larger than the evaporation amount of the refrigerant contained in the liquid phase (containing the refrigerating machine oil) in closed-system refrigerant circuit 100. Further, the refrigerating machine oil in compressor 3 may be heated before or during opening of gas pipe-side operation valve 11.

Subsequently, a step of separating the odorant from the refrigerant (S2a) is performed. In this step (S2a), the refrigerant and the odorant are separated by cooling the refrigerant, the odorant, and the refrigerating machine oil. The refrigerant, the odorant, and the refrigerating machine oil supplied to the discharge device are cooled to temperature Tc between boiling point Tb2 of the odorant and boiling point Tb1 of the refrigerant. Thereby, the gaseous refrigerant is not liquefied, and the odorant is liquefied. It should be noted that temperature Tc is above normal melting point Tm2 of the odorant. Accordingly, a blockage in discharge path 13 due to solidification of the odorant is suppressed. In particular, when the refrigerating machine oil is an oxygen-containing oil, the odorant is dissolved in the refrigerating machine oil.

On this occasion, the refrigerant and the odorant are supplied to the discharge device together with the refrigerating machine oil. Accordingly, the liquid odorant is contained in the refrigerating machine oil. When the liquid odorant is contained in the refrigerating machine oil, a vapor pressure depression of the odorant occurs. That is, since a vapor pressure depression of the odorant occurs, the amount of the odorant to be separated in the discharge device is improved. As a result, the amount of the gaseous odorant to be discharged out of the closed system together with the refrigerant decreases, and the odor of the discharged gaseous refrigerant is reduced, when compared with a case where the refrigerating machine oil is not discharged.

On this occasion, it is preferable that temperature Tc is above the pour point of the refrigerating machine oil. Thereby, it is possible to prevent a blockage in discharge path 13 due to a reduction in the fluidity of the refrigerating machine oil.

In this manner, the liquefied odorant is separated from the gaseous refrigerant, and the gaseous refrigerant is discharged out of the closed system.

### <Function and Effect>

The method for discharging the refrigerant according to the present disclosure includes the step of discharging the refrigerant containing the odorant from the refrigeration cycle apparatus (S1a), and the step of separating the odorant from the refrigerant (S2a) after the step of discharging (S1a). Boiling point Tb2 of the odorant is higher than boiling point Tb1 of the refrigerant. In the step of discharging (S1a), the refrigerant is discharged together with the refrigerating machine oil. In the step of separating (S2a), the refrigerant containing the odorant is cooled to temperature Tc between boiling point Tb2 of the odorant and boiling point Tb1 of the refrigerant. Temperature Tc is above melting point Tm2 of the odorant.

Thereby, a vapor pressure depression of the odorant occurs. That is, since a vapor pressure depression of the odorant occurs, the amount of the odorant to be separated in the discharge device is improved. As a result, the amount of the gaseous odorant to be discharged out of the closed system together with the refrigerant decreases, and the odor of the discharged gaseous refrigerant is reduced, when compared with the case where the refrigerating machine oil is not discharged.

In the method for discharging the refrigerant described above, in the step of separating (S2a), temperature Tc is above the pour point of the refrigerating machine oil. Thereby, since the pour point of the refrigerating machine oil is below temperature Tc, it is possible to prevent a blockage in discharge path 13 due to a reduction in the fluidity of the refrigerating machine oil.

In the method for discharging the refrigerant described above, the refrigerating machine oil is an oxygen-containing oil. Thereby, the refrigerating machine oil including the oxygen-containing oil can dissolve the odorant. Since the odorant is dissolved in the refrigerating machine oil including the oxygen-containing oil, a vapor pressure depression of the odorant occurs. That is, since a vapor pressure depression of the odorant occurs, the amount of the odorant to be liquefied is improved. As a result, the odor of the discharged gaseous refrigerant gas can be reduced.

In the method for discharging the refrigerant described above, the refrigeration cycle apparatus includes compressor 3. In the step of discharging (S1a), the refrigerating machine oil in compressor 3 is foamed. Thereby, the oil level of the refrigerating machine oil rises, and the amount of the refrigerating machine oil to be supplied to discharge path 13 increases. As a result, the amount of the odorant to be separated from the gaseous refrigerant increases.

In the method for discharging the refrigerant described above, the refrigeration cycle apparatus is connected to the discharge device via gas pipe-side operation valve 11. In the step of discharging (S1a), gas pipe-side operation valve 11 is quickly opened to foam the refrigerating machine oil in compressor 3. Thereby, the oil level of the refrigerating machine oil rises, and the amount of the refrigerating machine oil to be supplied to discharge path 13 increases. As a result, the amount of the odorant to be separated from the gaseous refrigerant increases.

Regarding the method for discharging the refrigerant described above, in the step of discharging (S1a), gas pipe-side operation valve 11 is quickly opened such that the flow rate of the refrigerant discharged immediately after gas pipe-side operation valve 11 is opened is larger than the evaporation amount of the refrigerant. Thereby, the oil level of the refrigerating machine oil rises, and the amount of the refrigerating machine oil to be supplied to discharge path 13 increases. As a result, the amount of the odorant to be separated from the gaseous refrigerant increases.

Regarding the method for discharging the refrigerant described above, in the step of discharging (S1a), the refrigerating machine oil in compressor 3 is heated to foam the refrigerating machine oil. Thereby, the oil level of the refrigerating machine oil rises, and the amount of the refrigerating machine oil to be supplied to discharge path 13 increases. As a result, the amount of the odorant to be separated from the gaseous refrigerant increases.

### Second Embodiment.

### <Method for Discharging Refrigerant>

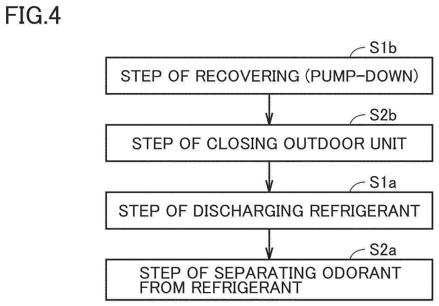

Fig. 4 is a flowchart of a method for discharging refrigerant in a refrigerant cycle apparatus according to a second embodiment. Fig. 4 corresponds to Fig. 3. The method for discharging the refrigerant in the refrigerant cycle apparatus shown in Fig. 4 basically has the same configuration as that of the method for discharging the refrigerant in the refrigerant cycle apparatus shown in Fig. 3, but is different therefrom in that pump-down is performed before the refrigerant is discharged.

When the refrigerant is discharged out of the closed system by the method for discharging the refrigerant in the refrigeration cycle apparatus according to the first embodiment, vapor pressure in closed-system refrigerant circuit 100 reaches equilibrium with the atmospheric pressure. When the vapor pressure in closed-system refrigerant circuit 100 reaches equilibrium with the atmospheric pressure, the refrigerant and the odorant in closed-system refrigerant circuit 100 are less likely to be discharged. As a result, the odor of the odorant remains in closed-system refrigerant circuit 100. When the refrigeration cycle apparatus is disassembled for transfer, repair, and the like in a state where the odor of the odorant remains in closed-system refrigerant circuit 100, the odor of the odorant is discharged out of the closed system on that occasion.

Here, in order to further remove the odorant remaining in closed-system refrigerant circuit 100, pump-down may be performed before the refrigerant is discharged from the refrigeration cycle apparatus. Specifically, before the refrigerant is discharged, a step of recovering the refrigerant containing the odorant into the outdoor unit (S1b) and a step of closing the outdoor unit (S2b) are performed. The step of recovering the refrigerant containing the odorant into the outdoor unit (S1b) is so-called pump-down.

As shown in Fig. 4, in the method for discharging the refrigerant in the refrigeration cycle apparatus according to the first embodiment, first, the step of recovering the refrigerant containing the odorant into outdoor unit 1 (S1b) is performed. In this step (S1b), the refrigerant and the odorant in closed-system refrigerant circuit 100 are recovered into condenser 4, a liquid receiver, and the like constituting outdoor unit 1, by pump-down. Specifically, liquid pipe-side operation valve 17 is closed. Then, compressor 3 is driven. On this occasion, it is preferable to drive compressor 3 until the pressure in indoor unit 2 and gas pipe 10 has a value below the atmospheric pressure. Thereby, the odorant dissolved in the refrigerating machine oil present in indoor unit 2 and gas pipe 10 evaporates. The odorant that has evaporated into the gaseous state moves into outdoor unit 1.

Subsequently, the step of closing the outdoor unit (S2b) is performed. In this step (S2b), after the refrigerant and the odorant move into outdoor unit 1, a connection portion (not shown) connecting outdoor unit 1 and gas pipe 10 is closed. Thereby, the refrigerant and the odorant are trapped in outdoor unit 1.

Subsequently, the step of discharging the refrigerant containing the odorant from the refrigeration cycle apparatus (S1a) and the step of separating the odorant from the refrigerant (S2a) are sequentially performed. The step of discharging the refrigerant containing the odorant from the refrigeration cycle apparatus (S1a) and the step of separating the odorant from the refrigerant (S2a) are the same as those of the method for discharging the refrigerant according to the first embodiment shown in Fig. 3. Thereby, the refrigerant and the odorant trapped in outdoor unit 1 can be discharged. As a result, the odor of the refrigerant is reduced when the refrigeration cycle apparatus is disassembled.

### <Function and Effect>

In the method for discharging the refrigerant described above, the refrigeration cycle apparatus has the outdoor unit. The method for discharging the refrigerant includes the step of recovering the refrigerant containing the odorant into the outdoor unit (S1b), and the step of closing the outdoor unit (S2b). Thereby, the odor of the refrigerant is reduced when the refrigeration cycle apparatus is disassembled.

### Third Embodiment.

### <Configuration of Treatment Device>

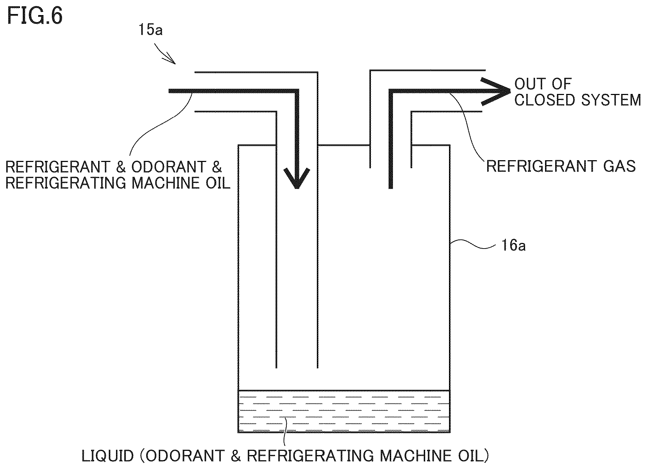

Fig. 5 is a schematic diagram showing an example of treatment device 13a according to a third embodiment. Fig. 6 is a schematic diagram of a separation unit 15a in treatment device 13a according to the third embodiment.

Treatment device 13a shown in Figs. 5 and 6 may be a discharge device to be attached to a refrigeration cycle apparatus as shown in Fig. 1, and is a treatment device to treat a working fluid used in the refrigeration cycle apparatus. The working fluid contains refrigerant, a refrigerating machine oil, and an odorant.

Treatment device 13a is configured to maintain a temperature of the working fluid above boiling point Tb1 of the refrigerant and below boiling point Tb2 of the odorant. Specifically, as shown in Fig. 5, treatment device 13a includes a cooling unit 14a and a separation unit 15a. The working fluid to be treated by treatment device 13a is supplied to cooling unit 14a. The working fluid is cooled in cooling unit 14a. As the working fluid is cooled, the odorant in the gaseous state mixed in the refrigerant is liquefied. As a result, the working fluid is configured to contain the refrigerant in the gaseous state, and the odorant and the refrigerating machine oil in a liquid state.

The working fluid cooled in cooling unit 14a is supplied to separation unit 15a. The working fluid supplied to separation unit 15a is separated into the gaseous refrigerant and the liquid odorant in a separation container 16a. It should be noted that, although cooling unit 14a and separation unit 15a may be configured independently of each other as shown in Fig. 5, cooling unit 14a may be configured to include separation unit 15a. That is, cooling unit 14a may be configured to cool separation unit 15a. Thereby, cooling and separation of the refrigerant and the odorant can be performed simultaneously.

The odorant cooled in cooling unit 14a is in the vapor-liquid equilibrium state. That is, the odorant in an amount corresponding to the saturated vapor pressure of the odorant at the temperature during cooling is contained in the gaseous refrigerant (in the gas phase).

Here, treatment device 13a according to the third embodiment has a characteristic that the refrigerant and the odorant are treated together with the refrigerating machine oil. Since the refrigerant and the odorant are discharged together with the refrigerating machine oil, which is an example of a liquid, the liquid odorant is contained in the refrigerating machine oil in separation unit 15a. When the liquid odorant is contained in the refrigerating machine oil, a vapor pressure depression of the odorant occurs. Occurrence of a vapor pressure depression of the odorant means that the saturated vapor pressure of the odorant decreases and the amount of the odorant contained in the gas phase is reduced. That is, since a vapor pressure depression of the odorant occurs, the amount of the odorant to be separated from the gaseous refrigerant in separation unit 15a is improved, and the amount of the odorant to be discharged out of a closed system together with the refrigerant can be reduced.

Here, cooling unit 14a will be specifically described. In cooling unit 14a, the working fluid (the refrigerant, the odorant, and the refrigerating machine oil) is cooled to temperature Tc. Temperature Tc is above normal boiling point Tb1 of the refrigerant and below normal boiling point Tb2 of the odorant. Thereby, the gaseous refrigerant is not liquefied and the odorant is liquefied in cooling unit 14a.

Temperature Tc may be above normal melting point Tm2 of the odorant. Thereby, the odorant is not solidified, and occurrence of a blockage in treatment device 13a can be suppressed.

The cooling method in cooling unit 14a is not particularly limited, and may be a cooling method by heat exchange, or may be a cooling method by expansion. Specifically, the cooling method by heat exchange is a method of cooling the working fluid passing through treatment device 13a by heat exchange between the working fluid and the outside. The cooling method by expansion is a method of cooling the working fluid by expanding the fluid passing through treatment device 13a. It should be noted that the working fluid contains the refrigerant, the odorant, and the refrigerating machine oil.

The cooling method by heat exchange may be, for example, a method of performing heat exchange by bringing treatment device 13a into contact with a low-temperature medium. Heat exchange is performed by exposing at least a part of a member constituting treatment device 13a to a medium such as a low-temperature gas or liquid, for example. The low-temperature medium may be a material that is inert to the member constituting treatment device 13a. This prevents the strength of treatment device 13a from being reduced, and being deteriorated in a short time.

When the cooling method in cooling unit 14a is the cooling method by heat exchange, at least a part of cooling unit 14a may be constituted by a material having a high thermal conductivity. Thereby, the fluid passing through treatment device 13a can be efficiently cooled. The material having a high thermal conductivity is a metal, for example. In particular, among metals, aluminum, iron, copper, and the like have a high thermal conductivity, and a low reactivity with the refrigerant. Accordingly, the material constituting at least a part of cooling unit 14a may be aluminum, iron, copper, or an alloy containing at least one of them as a main component.

When the cooling method in cooling unit 14a is cooling by expansion, cooling unit 14a may be constituted by an expansion valve, for example. Thereby, the working fluid that has flowed into cooling unit 14a is supplied to separation unit 15a with its temperature being lowered by decompression.

The working fluid (the refrigerant, the odorant, and the refrigerating machine oil) thus cooled is supplied to separation unit 15a.

Next, separation unit 15a will be specifically described. To prevent the odorant liquefied in cooling unit 14a from being discharged out of the closed system through treatment device 13a, a liquid and a gas are separated in separation unit 15a, and only the gas is discharged out of the closed system.

The separation method in separation unit 15a is not particularly limited, and may be any of a separation method utilizing a density difference between the gas and the liquid, a separation method utilizing a surface tension, a separation method utilizing a centrifugal force, and the like.

The separation method utilizing the density difference between the gas and the liquid is a method of separating the liquid and the gas by utilizing that the density of the liquid is higher than the density of the gas, as shown in Fig. 6, for example. Specifically, the refrigerant, the odorant, and the refrigerating machine oil are supplied to separation container 16a. The liquid is stored in a lower portion of separation container 16a. The gas is discharged out of the closed system.

The separated liquid contains the odorant liquefied in cooling unit 14a and the refrigerating machine oil. Since the refrigerating machine oil and the odorant are mixed as the liquid, a vapor pressure depression of the odorant occurs. Since a vapor pressure depression of the odorant occurs in separation unit 15a, the amount of the odorant present in the gas phase in separation container 16a decreases. That is, the amount of the gaseous odorant to be discharged out of the closed system together with the refrigerant decreases, and the odor of the discharged gaseous refrigerant is reduced, when compared with a case where the refrigerating machine oil is not present in separation unit 15a. A vapor pressure depression of the odorant occurs as long as the odorant and the refrigerating machine oil are in contact with each other. Accordingly, in any of the separation method utilizing the surface tension and the separation method utilizing the centrifugal force, the effect of reducing the discharge amount of the odorant utilizing a vapor pressure depression can also be obtained.

Separation container 16a may include a liquid level indicating portion and a liquid discharge portion (not shown). The liquid level indicating portion indicates the height of a liquid level inside separation container 16a. The liquid discharge portion can discharge the liquid stored inside separation container 16a. The liquid stored inside separation container 16a is discharged by an operation of opening/closing the liquid discharge portion. The liquid discharge portion may include, for example, a pipe connected to the bottom of separation container 16a, and an on-off valve installed in the pipe. The liquid indicating portion may include, for example, a sensor that detects the height of the liquid level, and an indicating portion that indicates a result detected by the sensor.

When the liquid level in separation container 16a rises above a predetermined height, the stored liquid may be discharged. Thereby, the liquid odorant is discharged. As a result, discharge of the gaseous refrigerant having a strong odor is prevented.

Further, separation container 16a may include a member capable of capturing the odorant inside separation container 16a by adsorption or absorption (not shown). Thereby, the odorant in the gas phase is further removed. As a result, the odor of the discharged gaseous refrigerant is reduced.

It should be noted that, in the separation method utilizing the density difference between the gas and the liquid, the configuration of separation unit 15a may not be the configuration shown in Fig. 6. The configuration of separation unit 15a may be a configuration including a space in which a diameter of a part of a pipe constituting treatment device 13a is enlarged, or may be a configuration including a baffle-type oil separator, for example.

In treatment device 13a, a filter may be provided inside separation unit 15a, or in a pipe on a subsequent stage side relative to separation unit 15a. The filter suppresses the liquid from being discharged out of the closed system, and allows the gaseous refrigerant to pass therethrough. Thereby, the amount of the odorant to be discharged out of the closed system is reduced, and the odor of the discharged gaseous refrigerant is reduced.

The material constituting the filter is a material capable of absorbing the odorant and the refrigerating machine oil. Further, the structure of the filter is preferably a structure excellent in air permeability so as not to reduce the flow rate of the gaseous refrigerant. As the material constituting such a filter, a nonwoven fabric may be used, for example.

The gaseous refrigerant discharged from separation unit 15a is discharged by either a recovery method or an atmospheric release method, in accordance with the global warming potential of the refrigerant, legal regulations, and the like. The refrigerant is preferably recovered by a recovery container. However, when it is difficult to charge the refrigerant into the recovery container for reasons such as legal regulations, the refrigerant is released to the atmosphere.

Further, the refrigerant is a fluid whose normal boiling point Tb1 is below normal boiling point Tb2 of the odorant. Thereby, the odorant can be selectively liquefied by cooling the refrigerant and the odorant in cooling unit 14a to temperature Tc between normal boiling point Tb2 of the odorant and normal boiling point Tb1 of the refrigerant. As a result, only the gaseous refrigerant can be discharged out of the closed system. It is only necessary for the refrigerant to satisfy the temperature relation described above, and the material constituting the refrigerant may be any of a halogenated hydrocarbon and a natural refrigerant, or may be a mixture thereof.

### <Method for Treating Working Fluid>

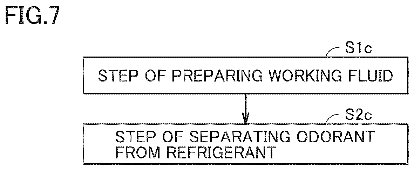

Fig. 7 is a flowchart of a method for treating the working fluid in treatment device 13a according to the third embodiment. In the method for treating the working fluid in treatment device 13a according to the third embodiment, first, a step of preparing the working fluid (S1c) is performed. In this step (S1c), for example, the working fluid used in the refrigeration cycle apparatus is prepared. The working fluid contains the refrigerant, the refrigerating machine oil, and the odorant. Boiling point Tb2 of the odorant is higher than boiling point Tb1 of the refrigerant. The refrigerating machine oil may be an oxygen-containing oil.

Subsequently, a step of separating the odorant from the refrigerant (S2c) is performed. In this step (S2c), the refrigerant and the odorant are separated by maintaining the temperature of the working fluid above boiling point Tb1 of the refrigerant and below boiling point tb2 of the odorant. Specifically, the prepared working fluid is cooled in cooling unit 14a. In cooling unit 14a, the temperature of the working fluid is cooled to temperature Tc between boiling point Tb2 of the odorant and boiling point Tb1 of the refrigerant. Thereby, the gaseous refrigerant is not liquefied, and the odorant is liquefied. It should be noted that temperature Tc is above normal melting point Tm2 of the odorant. Accordingly, a blockage in discharge path 13 due to solidification of the odorant is suppressed. In particular, when the refrigerating machine oil is an oxygen-containing oil, the odorant is dissolved in the refrigerating machine oil.

The working fluid cooled in cooling unit 14a is supplied to separation unit 15a. By maintaining the temperature of the working fluid supplied to separation unit 15a above boiling point Tb1 of the refrigerant and below boiling point Tb2 of the odorant, the liquid odorant is separated from the gaseous refrigerant.

The separation method utilizing the density difference between the gas and the liquid may be used to separate the liquid odorant from the gaseous refrigerant. Specifically, the liquid odorant is separated from the gaseous refrigerant by using separation container 16a as shown in Fig. 6.

On this occasion, the working fluid contains the refrigerating machine oil together with the refrigerant and the odorant. Accordingly, the refrigerating machine oil is contained in the liquid odorant. When the refrigerating machine oil is contained in the liquid odorant, a vapor pressure depression of the odorant occurs. That is, since a vapor pressure depression of the odorant occurs, the amount of the odorant to be separated in separation unit 15a is improved. As a result, the amount of the gaseous odorant to be discharged out of the closed system together with the refrigerant decreases, and the odor of the discharged gaseous refrigerant is reduced, when compared with the case where the refrigerating machine oil is not discharged.

On this occasion, temperature Tc may be above the pour point of the refrigerating machine oil. Thereby, it is possible to suppress a blockage in treatment device 13a due to a reduction in the fluidity of the refrigerating machine oil.

In this manner, the liquefied odorant is separated from the gaseous refrigerant, and the gaseous refrigerant is discharged out of the closed system.

### <Function and Effect>

The method for treating the working fluid according to the present disclosure includes the step of preparing the working fluid (S1c), and the step of separating the odorant from the refrigerant (S2c). The working fluid contains the refrigerant, the refrigerating machine oil, and the odorant. Boiling point Tb1 of the odorant is higher than boiling point Tb2 of the refrigerant. In the step of separating (S1c), the temperature of the working fluid is maintained above boiling point Tb1 of the refrigerant and below boiling point Tb2 of the odorant.

Thereby, the liquid odorant can be separated from the gaseous refrigerant, and the odor of the gaseous refrigerant can be suppressed.

According to the method for treating the working fluid described above, in the step of separating (S2c), the temperature is above the pour point of the refrigerating machine oil. Thereby, it is possible to prevent a blockage in treatment device 13a due to a reduction in the fluidity of the refrigerating machine oil.

According to the method for treating the working fluid described above, the refrigerating machine oil is an oxygen-containing oil. Thereby, the refrigerating machine oil including the oxygen-containing oil can dissolve the odorant. Since the odorant is dissolved in the refrigerating machine oil including the oxygen-containing oil, a vapor pressure depression of the odorant occurs. That is, since a vapor pressure depression of the odorant occurs, the amount of the odorant to be liquefied is improved. As a result, the odor of the discharged gaseous refrigerant gas can be reduced.

Treatment device 13a according to the present disclosure is treatment device 13a to treat the working fluid. The working fluid contains the refrigerant, the refrigerating machine oil, and the odorant. Boiling point Tb1 of the odorant is higher than boiling point Tb2 of the refrigerant. Treatment device 13a is configured to separate the gaseous refrigerant and the liquid odorant by cooling the temperature of the working fluid to above boiling point Tb1 of the refrigerant and below boiling point Tb2 of the odorant.

Thereby, the liquid odorant can be separated from the gaseous refrigerant, and the odor of the gaseous refrigerant can be suppressed.

Treatment device 13a according to the present disclosure includes cooling unit 14a and separation unit 15a. Cooling unit 14a cools the working fluid. The working fluid contains the refrigerant, the refrigerating machine oil, and the odorant. In the working fluid which is cooled, separation unit 15a separates the odorant from the refrigerant. Boiling point Tb1 of the odorant is higher than boiling point Tb2 of the refrigerant. Cooling unit 14a cools the temperature of the working fluid to above boiling point Tb1 of the refrigerant and below boiling point Tb2 of the odorant. Separation unit 15a separates the gaseous refrigerant and the liquid odorant.

Thereby, the liquid odorant can be separated from the gaseous refrigerant, and the odor of the gaseous refrigerant can be suppressed.

According to treatment device 13a described above, separation unit 15a separates the gaseous refrigerant and the liquid odorant by utilizing the density difference between the gas and the liquid.

Thereby, the liquid odorant can be separated from the gaseous refrigerant, and the odor of the gaseous refrigerant can be suppressed.

It should be understood that the embodiments disclosed herein are illustrative and non-restrictive in every respect. At least two of the embodiments disclosed herein may be combined as long as there is no contradiction. The basic scope of the present disclosure is defined by the scope of the claims, rather than the description above, and is intended to include any modifications within the scope and meaning equivalent to the scope of the claims.

### REFERENCE SIGNS LIST

1: outdoor unit; 2: indoor unit; 3: compressor; 4: condenser;, 5: outdoor blower; 6: expansion valve; 7: evaporator; 8: indoor blower; 9: liquid pipe; 10: gas pipe; 11: gas pipe-side operation valve: 12: service port; 13: discharge path; 13a: treatment device; 14, 14a: cooling unit; 15, 15a: separation unit; 16, 16a: separation container; 17: liquid pipe-side operation valve; 100: closed-system refrigerant circuit; Tb1, Tb2: boiling point; Tm2: melting point; Tc: temperature.

## Claims

1. A method for treating a working fluid, the method comprising:
preparing the working fluid containing refrigerant, a refrigerating machine oil, and an odorant; and
separating the odorant from the refrigerant, wherein
a boiling point of the odorant is higher than a boiling point of the refrigerant, and
in the separating, a temperature of the working fluid is maintained above the boiling point of the refrigerant and below the boiling point of the odorant.

2. The method for treating the working fluid according to claim 1, wherein, in the separating, the temperature is above a pour point of the refrigerating machine oil.

3. The method for treating the working fluid according to claim 1 or 2, wherein the refrigerating machine oil is an oxygen-containing oil.

4. A treatment device to treat a working fluid containing refrigerant, a refrigerating machine oil, and an odorant, wherein
a boiling point of the odorant is higher than a boiling point of the refrigerant, and
the treatment device is configured to maintain a temperature of the working fluid above the boiling point of the refrigerant and below the boiling point of the odorant.

5. A treatment device comprising:
a cooling unit to cool a working fluid containing refrigerant, a refrigerating machine oil, and an odorant; and
a separation unit to separate the odorant from the refrigerant in the working fluid which is cooled, wherein
a boiling point of the odorant is higher than a boiling point of the refrigerant,
the cooling unit cools a temperature of the working fluid to above the boiling point of the refrigerant and below the boiling point of the odorant, and
the separation unit separates the refrigerant in a gaseous state and the odorant in a liquid state.

6. The treatment device according to claim 5, wherein the separation unit separates the refrigerant in the gaseous state and the odorant in the liquid state by utilizing a density difference between a gas and a liquid.
